(19) Europäisches Patentamt

European Patent Office

Office européen des brevets

(11) **EP 0 283 793 B2**

(12) **NEUE EUROPÄISCHE PATENTSCHRIFT**

(45) Veröffentlichungstag und Bekanntmachung des Hinweises auf die Entscheidung über den Einspruch:
**15.01.1997 Patentblatt 1997/03**

(51) Int. Cl.⁶: **C01B 17/04**

(45) Hinweis auf die Patenterteilung:
**25.09.1991 Patentblatt 1991/39**

(21) Anmeldenummer: **88103338.5**

(22) Anmeldetag: **04.03.1988**

(54) **Verfahren und Reaktor zur katalytischen Umsetzung von H2S mit SO2 zu elementarem Schwefel**

Process and reactor for the catalytic conversion of hydrogen sulfide with sulfurdioxide to elemental sulfur

Procédé et réacteur de conversion catalytique d'hydrogène sulfuré avec de l'anhydride sulfureux en soufre élémentaire

(84) Benannte Vertragsstaaten:
**DE ES FR GB IT NL**

(30) Priorität: **19.03.1987 DE 3709031**
**19.03.1987 DE 3709048**

(43) Veröffentlichungstag der Anmeldung:
**28.09.1988 Patentblatt 1988/39**

(73) Patentinhaber: **Linde Aktiengesellschaft**
**65189 Wiesbaden (DE)**

(72) Erfinder:
• **Marold, Freimut**
**D-8014 Neubiberg (DE)**
• **Heisel, Michael, Dr.-Ing.**
**D-8023 Pullach (DE)**

(74) Vertreter: **Schaefer, Gerhard, Dr.**
**Linde Aktiengesellschaft**
**Zentrale Patentabteilung**
**82049 Höllriegelskreuth (DE)**

(56) Entgegenhaltungen:
CA-A-  945 740          DE-A- 1 809 329
DE-A- 2 109 761        DE-A- 2 923 895
DE-A- 3 428 452        DE-A- 3 526 706
DE-C- 2 617 649        GB-A- 2 009 720
US-A- 2 785 056        US-A- 4 309 402
US-A- 4 430 317

**Beschreibung**

Die Erfindung betrifft ein Verfahren zur katalytischen Umsetzung von in einem Gasstrom enthaltenem H2S mit SO2 zu elementarem Schwefel in einer Anlage mit mindestens zwei Katalysatorbetten, wobei mindestens ein Katalysatorbett zur Umsetzung der Schwefelverbindungen und Adsorption von Schwefel unterhalb des Schwefeltaupunktes betrieben und mindestens ein weiteres regeneriert wird, der entstehende dampfförmige Schwefel durch Abkühlen auskondensiert und der von Schwefelverbindungen befreite Gasstrom abgezogen wird.

Bei der Verarbeitung von Rohgasströmen, die in irgendeiner Form Schwefel enthalten, fallen Sauergase, z.B. H2S und SO2, an, die in einem zusätzlichen Verfahrensschritt abgetrennt werden müssen, um das gewonnene Gas entweder direkt an die Umgebung abgeben oder weiter verarbeiten zu können. Da sehr viele fossile Brennstoffe Schwefel in gebundener Form enthalten, gewinnt die Gasentschwefelung immer stärkere Bedeutung. Die Abtrennung kann auf verschiedene Weise erfolgen, beispielsweise adsorptiv bzw. katalytisch oder durch physikalische oder chemische Wäsche.

Bedingt durch die Forderung nach einem bestimmten Entschwefelungsgrad und Umwandlungsprodukt des Schwefels wählt man ein geeignetes Verfahren aus.

Ein bekanntes Verfahren, bei dem H2S und SO2 zu Elementarschwefel umgewandelt werden und eine Entschwefelung von über 99 % gewährleistet wird, ist beispielsweise ein konventioneller Clausprozeß mit 4 in Reihe geschalteten katalytischen Reaktoren, wobei die letzten 2 unterhalb des Schwefeltaupunktes betrieben werden. Das hat zur Folge, daß das chemische Gleichgewicht stärker in Richtung auf die Umsetzung von H2S und SO2 zu Elementarschwefel verschoben wird als in konventionellen Clausprozessen ohne Schwefeltaupunktunterschreitung.

Der Grund hierfür ist, daß ein Großteil des gebildeten Schwefels durch Adsorption auf dem Katalysator aus dem Dampf entfernt wird und so das Gleichgewicht der Reaktion

$$2 \text{ H2S} + \text{SO2} \rightarrow 3/x \text{ S}_x + 2 \text{ H20} + \Delta \text{ H}$$

durch die Schwefelabscheidung auf die rechte Seite der Gleichung verschoben wird.

Durch die Schwefelkondensation wird der Katalysator desaktiviert, so daß er nach einer bestimmten Zeit regeneriert werden muß. Um einen kontinuierlichen Betrieb der Anlage aufrechtzuerhalten, wird von den 4 Reaktoren der erste immer als konventioneller Claus-Reaktor betrieben, einer gerade regeneriert, während die restlichen 2 unterhalb des Schwefeltaupunktes gefahren werden. Zur Regenerierung wird der Gasstrom beispielsweise mittels Gas-Gas-Wärmetauschern derart angewärmt, daß beim Überleiten über den mit Schwefel beladenen Katalysator der Schwefel abgedampft wird.

Erreicht die Schwefelbeladung des Katalysators ein bestimmtes Maß, so erfolgt eine automatische Umschaltung des Reaktors in die Regenerationsphase und eine entsprechende Umschaltung der beiden unterhalb des Schwefeltaupunktes arbeitenden Reaktoren.

Ein derartiges Verfahren ist zum Beispiel im Oil & Gas Journal vom 12. September 1983 auf den Seiten 156 - 160 beschrieben.

Das bekannte Verfahren hat den großen Nachteil, daß mindestens 4 Claus Reaktoren, von denen jeweils 2 unterhalb des S-Taupunktes betrieben werden, notwendig sind, um eine S-Rückgewinnung von über 99,0% zu erreichen. Bei Verwendung von weniger als 4 Claus-Reaktoren ist somit im Hinblick auf die zunehmende Belastung der Umwelt und damit einhergehende Verschärfung der zulässigen Emissionsgrenzen, bei den bekannten Verfahren auf jeden Fall eine noch effektivere Nachreinigung, wie beispielsweise eine SO2-Rückführung, notwendig.

Außerdem hat das bekannte Verfahren den weiteren Nachteil, daß für einen Betrieb der Anlage mit Online-Regenerierung sehr viele Ventile und Rohrleitungen notwendig sind. Dabei sind speziell an den Ventilen Probleme durch Korrosion und mit der Dichtigkeit (sie müssen gasdicht sein) aufgetreten. Außerdem ist es notwendig, die Ventile zu beheizen, damit der Schwefel, der im Gasstrom enthalten ist, nicht auskondensiert. Des weiteren führen schon sehr geringe Verunreinigungen des Gasstroms mit Feststoffpartikeln, wie beispielsweise Staub, zur Undichtigkeit der Ventile.

Da der Gasstrom aus dem konventionellen Claus-Reaktor meist nur unter einem sehr niedrigen Druck steht, hat der Gasstrom ein entsprechend großes Volumen, was wiederum entsprechend große Ventile erfordert.

Somit ergeben sich hohe Verschleißkosten, hoher Montageaufwand, hohe Störanfälligkeit und ein nicht zu unterschätzender Platzbedarf der Anlage und damit insgesamt hohe Investitions- und Betriebskosten.

Es ist daher Aufgabe der Erfindung, ein Verfahren zur katalytischen Umsetzung von $H_2S$ und $SO_2$ zu Elememtarschwefel so auszugestalten, daß auf möglichst einfache und kostensparende Weise eine Schwefelrückgewinnung von über 99,0 % erreicht und eine problemlose Regenerierung ermöglicht wird.

Aus der DE-A-21 09 761 ist ein Verfahren zur katalytischen Umsetzung von $H_2S$ und $SO_2$ zu Elememtarschwefel mit zwei wechselseitig benutzten katalytischen Reaktionszonen bekannt, wobei die eine Reaktionszone zur Regenerierung von niedergeschlagenem Schwefel bei einer Temperatur von 232-316°C bei gleichzeitiger Bildung von Schwefel betrieben wird, während in die andere Reaktionszone das Gas mit einer Temperatur von 93-204°C einströmt und sich Schwefel auf dem Katalysator niederschlägt. CA-A-945 740 lehrt eine katalytischen Umsetzung von $H_2S$ und $SO_2$ zu Schwefel unterhalb des Schwefeltaupunktes, der mit ca. 185°C angegeben wird. Die DE-C-26 17 649 beschreibt die katalytischen Umsetzung von $H_2S$ und $SO_2$ zu Elememtarschwefel in einem Reaktor bei Eintrittstemperaturen von 80-150°C in Adsorptionsbetrieb. Es werden zumindest zwei Reaktoren eingesetzt, wobei mindestens einer im Adsorptionsbetrieb arbeitet, während ein Reaktor regeneriert wird. Aus der DE-A-18 09 329 ist ein Verfahren zur Behandlung von Abgasen von Claus-Anlagen bekannt, wobei die Abgase auf eine Temperatur von 70 bis 130°C gekühlt und anschließend einer katalytischen Umsetzung unter Bildung von Elementarschwefel unterworfen werden. US-A-4 430 317 beschreibt die Behandlung eines Abgases einer Claus-Anlage (Claus tail gas), wobei das Abgas ohne weitere Vorbehandlung in einen katalytischen Claus-Reaktor zur Umwandlung der Schwefelkomponenten in Elementarschwefel bei Temperaturen von 121 bis 148°C gegeben werden kann. US-A-2 785 056 lehrt eine katalytische Umsetzung von $H_2S$ und $SO_2$ oder $O_2$ zu Elementarschwefel unterhalb des Schwefeltaupunktes, gegebenenfalls unterhalb des Schwefelfestpunktes. Aus der US-A-4 309 402 ist ein Verfahren zur katalytischen Umsetzung in Elementarschwefel bekannt, wobei darauf hingewiesen wird, daß der Betrieb unterhalb des Schwefelfestpunktes durch Schwefelablagerungen zu Beschädigungen des Katalysators führt. In den vorgenannten Schutzrechten werden ausschließlich adiabat betriebene Reaktoren eingesetzt.

Aus der DE-A-34 28 452 und der DE-A-35 26 706 ist die katalytische Umsetzung von $H_2S$ mit $SO_2$ zu Elementarschwefel bei Temperaturen unterhalb des Schwefeltaupunktes, aber zwischen 5 und 10°C über dem Schwefelfestpunkt bekannt, wobei innen gekühlte und beheizte Reaktoren eingesetzt werden. Dabei kann eine quasi-adiabat betriebene Katalysatorschicht beispielsweise zur Hydrolyse von COS und/oder $CS_2$ zu $H_2S$ vorgeschaltet sein.

Bisher war es großtechnisch in einer kontinuierlich betriebenen Anlage nicht möglich, Temperatur und Schwefeldampfdruck weiter als bis knapp oberhalb des Schwefelfestpunktes abzusenken, da in den vorhandenen Anlagen, deren Reaktoren adiabat betrieben wurden, keine Möglichkeit bestand, fest gewordenen Schwefel, wenn er den Gasstrom blockiert, wieder zu entfernen.

Wird die Abkühlung mittels vorgeschalteter Wärmetauscher durchgeführt, so ist eine Unterschreitung des S-Festpunktes ohnehin nicht möglich, da es zu einer irreversiblen Verlegung des Wärmetauschers kommen würde.

Adiabate katalytische Reaktoren, die unterhalb des Schwefelfestpunktes betrieben werden, setzen sich von außen nach innen zu. In dem im Innern verbleibenden freien Querschnitt findet dann zunehmend weniger Reaktion statt, da die Verweilzeit des Gases innen zu gering wird, je weiter der Reaktor zufriert; denn bei gleichem Durchsatz und sich verengender Querschnittsfläche erhöht sich die Gasgeschwindigkeit erheblich. Auch ist es in diesem Zusammenhang von Nachteil, daß der feste Schwefel ein sehr gutes Dämm- bzw. Isoliermaterial ist, so daß die Wärmeabfuhr drastisch verschlechtert ist, was zusätzlich die exotherme Umsetzung von H2S und SO2 zu Elementarschwefel negativ beeinflußt.

Die Erfindung löst die gestellte Aufgabe und vermeidet vorstehend beschriebene Probleme dadurch, daß die Katalysatorbetten während der Adsorption unterhalb des Schwefelfestpunktes betrieben werden, wobei sich der Katalysator mit elementarem Schwefel in fester Form belädt, daß die Katalysatorbetten anschließend durch Erwärmen regeneriert werden und daß die Katalysatorbetten von innen indirekt gekühlt und beheizt werden.

Der Einsatz eines innen beheizten Reaktors ermöglicht eine unmittelbare Wärmezuführung in das Katalysatorbett. Damit wird eine irreversible Blockade und Desaktivierung des Katalysatorbettes verhindert.

Mit Vorteil wird die katalytische Umsetzung und Adsorption von Schwefel bei Temperaturen zwischen Schwefelfestpunkt und Wassertaupunkt durchgeführt.

Die für das erfindungsgemäße Verfahren zusätzliche Energie zur Einhaltung der niedrigen Reaktionstemperatur bzw. zum Verflüssigen des Schwefels auf dem Katalysator kann ohne Probleme, beispielsweise mittels Kesselspeisewasser bzw. Hochdruckdampf, bereitgestellt werden.

Aufgrund des erfindungsgemäßen Verfahrens lassen sich aus niedrigkonzentrierten ebenso wie aus hochkonzentrierten Clausgasen im allgemeinen mehr als 99,5% des Schwefels rückgewinnen, ohne daß zusätzliche separate Reinigungsschritte benötigt werden. Dieses beinhaltet eine wesentliche Verringerung der Investitionskosten und des Platzbedarfs der Anlage, womit der Vorteil gegenüber bekannten Verfahren offensichtlich ist.

Weiterhin ist es zweckmäßig, einen Teil jedes Katalysatorbettes bei Temperaturen oberhalb des Schwefelfestpunktes zu betreiben.

Es hat sich als zweckmäßig erwiesen, stets mindestens zwei Reaktoren in Stromrichtung hintereinander arbeiten zu lassen. Dadurch ist eine Regenerierung der Katalysatorbetten während des Normalbetriebes möglich und zwar ohne Zuschaltung eines eigenen Regenerierkreislaufes und ohne Umlenkung des Gasstromes über andere Katalysatorbetten und außenliegende Wärmetauscher.

Weiterhin ist von Bedeutung, daß der gesamte Gasstrom zum Regenerieren verwendet wird, wodurch er zugleich weiter entschwefelt wird, da die Katalysatorbetten auch bei nahezu vollständiger Beladung noch für die Claus-Reaktion aktiv sind.

Damit ist es möglich, die Anzahl der benötigten Ventile und Rohrleitungen zu verringern, was in bevorzugter Weise nur durch die Umkehrung der Strömungsrichtung zu erreichen ist. Gemäß dem erfindungsgemäßen Verfahren wird hierzu mindestens eine Mehrwegearmatur verwendet.

Mehrwegearmaturen bieten gegenüber herkömmlichen Schaltventilen den Vorteil, daß sie nicht beheizt werden müssen und unempfindlicher gegenüber Verunreinigungen des Gasstromes sind. Überdies sind sie besser steuerbar und einfacher zu bedienen.

Erfindungsgemäß werden die Reaktoren sowohl während der Regenerierung als auch während der Adsorption in derselben Richtung durchströmt. Damit wird eine möglichst geringe Beanspruchung bzw. geringer Verschleiß des Katalysators erreicht.

Im Gegensatz zu der vorstehend genannten erfindungsgemäßen Ausgestaltungsform ist es in manchen Fällen zweckmäßig, daß die Reaktoren während der Regenerierung und der Adsorption in entgegengesetzter Richtung durchströmt werden. Auf diese Weise ist zwar die Katalysatorbeanspruchung etwas erhöht, aber dafür werden wesentlich weniger Rohrleitungen benötigt.

Die Katalystorbetten werden mittels eines Wärmeträgermediums während der katalytischen Umsetzung gekühlt bzw. während der Regenerierung beheizt, was bedeutet, daß es sich hier um nicht adiabate Reaktoren handelt. Mit Vorteil wird dabei als Wärmeträgermedium Kesselspeisewasser bzw. Dampf verwendet, da diese auf einfache und billige Weise bereitzustellen sind. Außerdem erhöht die nicht adiabate Reaktionsführung den Umsatz von H2S und SO2 zu Elementarschwefel. Auch kann die häufig erforderliche Hydrolyse von COS/CS2 zu H2S in einer adiabaten Vorschicht im selben Reaktor erfolgen.

Um die Störanfälligkeit der Anlage und die Zahl der bewegten Teile weiter zu verringern ist es besonders zweckmäßig, zur Umschaltung der Strömungsrichtung nur eine Mehrwegearmatur zu verwenden und jedem Katalysatorbett einen Schwefelkondensator nachzuschalten.

Bisher ist es üblich, den Schwefel, der gasförmig aus dem Reaktor austritt, in einem nachgeschalteten Kondensator abzutrennen. Indem gemäß einer weiteren Ausgestaltung der Erfindung eine weitere Mehrwegearmatur zwischen einem ersten Reaktor und dem nachgeschalteten Schwefelkondensator installiert wird, läßt sich für jeweils zwei Reaktoren ein gemeinsamer Schwefelkondensator verwenden. Das bedeutet, daß der installierte Schwefelkondensator stets in der gleichen Richtung durchströmt wird unabhängig von der Position der Reaktoren.

In Weiterbildung des Erfindungsgedankens wird dem Gasstrom vor dem Durchströmen der ersten Mehrwegearmatur ein O2-haltiges Gas zugesetzt, wodurch auch Rohgasströme mit einem niedrigen H2S-Gehalt, beispielsweise als 20 Vol.% H2S, und einem hohen Gehalt an anderen Komponenten wie z.B. HCN, NH3 und Kohlenwasserstoffen eingesetzt werden können. Dabei ermöglicht das zugesetzte O2-haltige Gas, beispielsweise Luft, die direkte Oxidation von H2S im ersten Reaktor.

Mit Vorteil wird weiterhin vor dem letzten Reaktor, vorzugsweise vor der Schwefelkondensation, O2-haltiges Gas zugegeben. Aufgrund dieser O2-Feindosierung wird die Direktoxidation von H2S und SO2 zu Elementarschwefel optimiert, so daß eine maximale Schwefelrückgewinnung von über 99% erreicht wird.

Besonders geeignet ist das erfindungsgemäße Verfahren für die Verarbeitung von Gasströmen, die zu weniger als 20 Vol.% aus H2S bestehen.

Von besonderem Vorteil ist es überdies, wenn der ersten Mehrwegearmatur einer oder mehrere Claus-Reaktoren und Schwefelkondensatoren vorgeschaltet sind. Dabei können sowohl konventionelle Claus-Reaktoren als auch nicht adiabate Reaktoren verwendet werden. Ein derartiges Verfahren ist somit auch einsetzbar zur Behandlung von Claus-Abgas, womit die sich anschließende Nachverbrennung gegebenenfalls bei niedrigeren Temperaturen durchgeführt werden kann.

In einer weiteren Ausführung des erfindungsgemäßen Verfahrens wird vorgeschlagen, daß die zur Kühlung des unterhalb des Schwefeltaupunktes betriebenen Katalysatorbettes vom Kesselspeisewasser aufgenommene Wärme zur Erzeugung von Hochdruckdampf für die Regenerierung eines weiteren Katalysatorbettes zur Verfügung gestellt wird. Dabei wird das Kesselspeisewasser in vorteilhafter Weise in dem Reaktor, in dem die katalytische Umsetzung stattfindet, verdampft und mittels einer Pumpe zum in der Regenerierphase befindlichen Reaktor befördert, wo es im indirekten Wärmetausch das Katalysatorbett aufheizt und dabei auskondensiert.

Für das erfindungsgemäße Verfahren empfiehlt es sich, einen Katalysator, der die Direktoxidation von H2S zu SO2 und/oder S ermöglicht, zu verwenden, damit in dem Reaktor sowohl die H2S-Oxidation als auch die Claus-Reaktion stattfindet.

Dabei ist es aufgrund der Zyklenfahrweise notwendig, daß alle Katalysatorbetten gleicher Zusammensetzung und gleichen Aufbaus sind. Besonders auch im Hinblick darauf, daß es möglich ist, das Katalysatorbett aufzuteilen und in einer adiabaten Vorschicht einen Katalysator einzusetzen, der die Hydrolyse von eventuell vorhandenem COS bzw. CS2 zu H2S gewährleistet. Für die Hydrolyse wird beispielsweise ein auf TiO2 basierender Katalysator verwendet.

Vorteile ergeben sich beim Einsatz eines Reaktors zur Durchführung des Verfahrens mit mindestens einem Katalysatorbett, wobei in den Katalysatorbetten mindestens eine Wärmetauscherschlange angeordnet ist.

Um eine gute Wärmeabfuhr bzw. gleichmäßige Beheizung des Reaktors zu erreichen, ist es besonders vorteilhaft, mehrere Bündel von Kühl- bzw. Heizschlangen, die spiral- oder schlangenförmig in einer Ebene angeordnet sind, einzusetzen.

Überdies ist es in manchen Fällen äußerst zweckmäßig, das Katalysatorbett aufzuteilen und in einer adiabaten Vorschicht einen Katalysator einzusetzen, der die Hydrolyse von eventuell vorhandenem COS bzw. CS2 zu H2S gewährleistet.

Besonders günstig ist es, wenn in dem Reaktor eine für die Direktoxidation von H2S zu SO2 und/oder S aktive Katalysatorschicht enthalten ist.

Geeignet ist eine Vorrichtung zur Durchführung des Verfahrens mit mindestens zwei Reaktoren, in denen ein oder mehrere Katalysatorbetten installiert sind, einer Rohgasleitung sowie mindestens einer Mehrwegearmatur, bei der die Mehrwegearmatur in die Rohgasleitung vor dem ersten Katalysatorbett installiert ist.

Dadurch wird jeweils der gesamte Gasstrom zyklisch umgekehrt. Auf diese Weise sind wesentlich weniger Rohrleitungen notwendig und es wird auch kein Kreislaufgebläse benötigt. Ferner wird so die Zahl der außenliegenden Wärmetauscher gegebenenfalls auf Null - beispielsweise bei Verwendung von nicht adiabaten Reaktoren - reduziert.

Insgesamt bietet die Erfindung wesentliche Vorteile in Bezug auf Kosten- und Verfahrensoptimierung gegenüber dem bekannten Verfahren, da der apparative Aufwand wesentlich geringer ist und somit auch der Betrieb der Anlage bzw. die Steuerbarkeit gegenüber dem Stand der Technik vereinfacht und weniger störanfällig ist und somit die Leistungsfähigkeit der Anlage verbessert ist. Außerdem ermöglicht die Erfindung eine höhere Beladung des Katalysators mit Schwefel.

Aufgrund der Direktbeheizung der desaktivierten Katalysatorbetten verkürzen sich die Regenerierzeiten, wodurch weniger Katalysator pro Reaktor erforderlich ist, was zu einer weiteren Kostenersparnis führt.

Die Erfindung ist überall einsetzbar, wo eine Verbesserung der Schwefelrückgewinnung aus Sauergasen erreicht werden soll, insbesondere aber zur Optimierung der Schwefelrückgewinnung aus Claus-Abgasen.

Im folgenden sei das erfindungsgemäße Verfahren anhand zweier schematisch dargestellter Ausführungsbeispiele näher erläutert.

Ein Rohgas, welches beispielsweise $H_2S$ und $SO_2$ im Verhältnis von ca. 2 zu 1 enthält und zum Beispiel aus einem Clausbrenner stammt, wird über Leitung 1 einer Mehrwegearmatur 2 (Klappe in Stellung A) zugeführt. Über Leitung 3 gelangt das Rohgas in den Reaktor 4. In dem Reaktor 4 ist ein Katalysatorbett 5 installiert, welches von früher mit Schwefel beladen ist.

Durch die Heiz- bzw. Kühlschlangen 6, die im Katalysatorbett 5 geführt sind, wird Hochdruckdampf mit beispielsweise einem Druck von 40 bar und einer Temperatur von 250 ° C geleitet, so daß das Katalysatorbett 5 angewärmt wird. Dabei dampft der früher abgeschiedene Elementarschwefel ab, und aufgrund dessen wird der Katalysator reaktiviert. Gleichzeitig arbeitet der Reaktor 4 als katalytischer Claus-Reaktor oberhalb des Schwefelfestpunktes.

Über Leitung 7, Mehrwegearmatur 8 (Klappe in Stellung A) und Leitung 9 gelangt das Gas zum Schwefelkondensator 10, wo über Leitung 11 flüssiger Schwefel abgezogen wird. Das im wesentlichen vom Schwefel befreite Gas wird anschließend durch Leitung 12 und über die Mehrwegearmatur 8 (Klappe in Stellung A) sowie Leitung 13 dem Reaktor 14 zugeführt, der im Aufbau, d.h. Katalysatorbett 15 und Kühl/Heizschlangen 16, mit dem Reaktor 4 identisch ist.

Reaktor 14 arbeitet unterhalb des Schwefelfestpunktes, beispielsweise bei ca. 90 ° C, und adsorbiert dadurch den Schwefeldampf, der mit dem Gas eingetragen wird, sowie den Elementarschwefel, der im Reaktor 14 gebildet wird. Durch die Entfernung des Schwefels aus der Gasphase wird das chemische Gleichgewicht in Richtung vermehrter Schwefelbildung verschoben, wobei sich die gegenüber Verfahren, die unterhalb des Schwefeltaupunktes bei ca. 120 ° C arbeiten, niedrigere Temperatur zugunsten einer vermehrten Schwefelentfernung aus dem Gas auswirkt.

Aus dem Reaktor 14 gelangt das Reingas über Leitung 17 und Mehrwegearmatur 2 (Klappe in Stellung A) in die Leitung 18 und somit zur Anlagengrenze.

Nach Beladung des Katalysators im Reaktor 14 mit Schwefel werden die Mehrwegearmaturen 2 und 8, die miteinander gekoppelt sind, umgeschaltet (Klappen in Stellung B).

Die durch die Umschaltung (nicht ausgefüllte Pfeilspitzen in der Figur) erfolgte Umkehrung der Strömungsrichtung, bewirkt, daß das Rohgas nun über die Mehrwegearmatur 2 (Klappe in Stellung B) und die Leitungen 17 und 16 zuerst in den Reaktor 14 eintritt, der nun in Gegenrichtung zum vorherigen Zyklus durchströmt wird. Dadurch wird Reaktor 14, wie schon zuvor für den beladenen Reaktor 4 beschrieben, regeneriert. Nach Austritt aus dem Reaktor 14 wird das Gas analog dem vorherigen Zyklus dem Reaktor 4 zugeleitet, der nun unterhalb des Schwefelfestpunktes betrieben wird. Über Leitung 3 und auch wieder über die Mehrwegearmatur 2 (Klappe in Stellung B) und Leitung 18 erreicht das gereinigte Gas die Anlagengrenze.

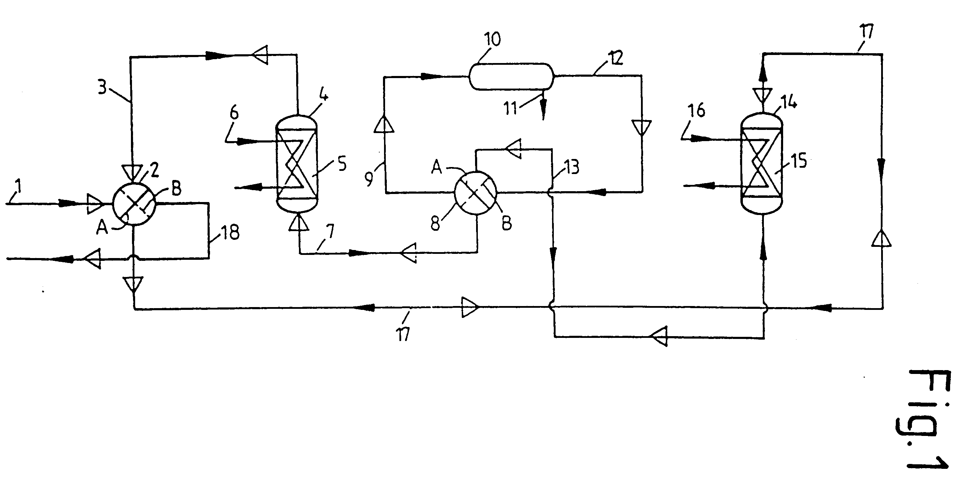

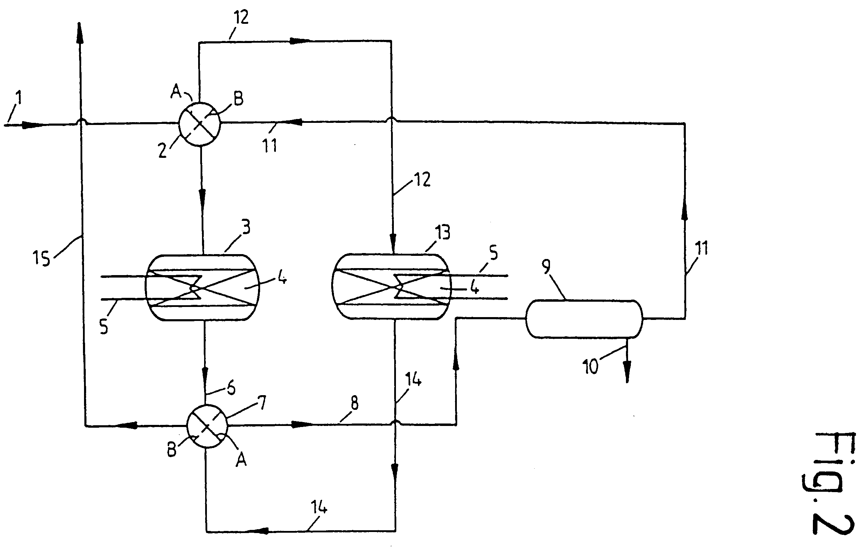

Gemäß Figur 2 tritt ein Claus-Abgas über Leitung 1 in die Mehrwegearmatur 2 (Klappe in Stellung A) in einen Reaktor 5 ein, der mit einem Katalysatorbett 4 und Wärmetauscherschlangen 5 ausgestattet ist. Das Katalysatorbett 4 ist von früher mit Schwefel beladen. Durch die Wärmetauscherschlangen 5 wird das Katalysatorbett angewärmt, so daß der abgeschiedene Elementarschwefel abdampft, wodurch der Katalysator reaktiviert wird.

Über Leitung 6, Mehrwegearmatur 7 (Klappe in Stellung A) und Leitung 8 gelangt das Gas in einen Schwefelkondensator 9, wo über Leitung 10 flüssiger Schwefel abgezogen wird.

Anschließend wird das im wesentlichen vom Schwefel befreite Gas über Leitung 11, Mehrwegearmatur 2 (Klappe in Stellung A) und Leitung 12 dem Reaktor 13, welcher im Aufbau identisch mit Reaktor 3 ist, zugeführt. Dabei ist zu beachten, daß die Reaktoren 3 und 13 beide in derselben Richtung durchströmt werden.

Reaktor 13 wird in diesem Zyklus unterhalb des Schwefelfestpunktes betrieben, so daß sich der Katalysator mit Schwefel belädt. Auf diese Weise wird der in der Gasphase vorhandene Schwefel entfernt.

Das so erhaltene Reingas wird über Leitung 14, Mehrwegearmatur 7 (Klappe in Stellung A) und Leitung 15 weiter verarbeitenden Anlagen zugeführt.

Bei Erreichen einer bestimmten Schwefelbeladung des Katalysators in Reaktor 13 werden die Mehrwegearmaturen 2 und 7 umgeschaltet (Klappen in Stellung B). Dadurch werden die Funktionen der Reaktoren ausgetauscht und so tritt das Claus-Abgas nun zuerst über Leitung 12 in Reaktor 13 ein.

Im folgenden durchläuft das Gas denselben Prozeß wie vorstehend beschrieben.

**Patentansprüche**

1. Verfahren zur katalytischen Umsetzung von in einem Gasstrom enthaltenem $H_2S$ mit $SO_2$ zu elementarem Schwefel in einer Anlage mit mindestens zwei Katalysatorbetten, wobei mindestens ein Katalysatorbett zur Umsetzung der Schwefelverbindungen und Adsorption von Schwefel unterhalb des Schwefeltaupunktes betrieben und mindestens ein weiteres regeneriert wird, der entstehende dampfförmige Schwefel durch Abkühlen auskondensiert und der von Schwefelverbindungen befreite Gasstrom abgezogen wird, **dadurch gekennzeichnet**, daß die Katalysatorbetten während der Adsorption unterhalb des Schwefelfestpunktes betrieben werden, wobei sich der Katalysator mit elementarem Schwefel in fester Form belädt, daß die Katalysatorbetten anschließend durch Erwärmen regeneriert werden und daß die Katalysatorbetten von innen indirekt gekühlt und beheizt werden.

2. Verfahren nach Anspruch 1, dadurch gekennzeichnet, daß die katalytische Umsetzung und Adsorption von Schwefel bei Temperaturen zwischen Schwefelfestpunkt und Wassertaupunkt durchgeführt wird.

3. Verfahren nach einem der Ansprüche 1 bis 2, dadurch gekennzeichnet, daß ein Teil jedes Katalysatorbettes bei Temperaturen oberhalb des Schwefelfestpunktes betrieben wird.

4. Verfahren nach einem der Ansprüche 1 bis 3, dadurch gekennzeichnet, daß die Katalysalorbetten sowohl während der Regenerierung als auch während der Adsorption in derselben Richtung durchströmt werden.

5. Verfahren nach einem der Ansprüche 1 bis 3, dadurch gekennzeichnet, daß die Reaktoren während der Regenerierung und der Adsorption in entgegengesetzter Richtung durchströmt werden.

6. Verfahren nach Anspruch 5 oder 4, dadurch gekennzeichnet, daß die Umschaltung der Strömungsrichtung mittels mindestens einer Mehrwegearmatur erfolgt.

7. Verfahren nach einem der Ansprüche 1 bis 6, dadurch gekennzeichnet, daß die Katalysatorbetten mittels eines Wärmeträgermediums innen während der katalytischen Umsetzung gekühlt bzw. während der Regenerierung beheizt werden.

8. Verfahren nach Anspruch 7, dadurch gekennzeichnet, daß als Wärmeträgermedium Kesselspeisewasser bzw. Dampf verwendet wird.

9. Verfahren nach einem der Ansprüche 1 bis 8, dadurch gekennzeichnet, daß das Gas vor Durchströmen adiabatischer Katalysatorbetten mittels Wärmetauschern angewärmt oder abgekühlt wird.

10. Verfahren nach einem der Ansprüche 1 bis 9, dadurch gekennzeichnet, daß zur Umschaltung der Strömungsrichtung nur eine Mehrwegearmatur verwendet wird und jedem Katalysatorbett ein Schwefelkondensator nachgeschaltet wird.

11. Verfahren nach einem der Ansprüche 1 bis 9, dadurch gekennzeichnet, daß für jeweils zwei Reaktoren ein gemeinsamer Schwefelkondensator verwendet wird.

12. Verfahren nach einem der Ansprüche 1 bis 11, dadurch gekennzeichnet, daß dem Gasstrom vor dem Durchströmen der ersten Mehrwegearmatur ein 02-haltiges Gas zugesetzt wird.

13. Verfahren nach einem der Ansprüche 1 bis 11, dadurch gekennzeichnet, daß vor der Schwefelkondensation 02-haltiges Gas zugesetzt wird.

14. Verfahren nach einem der Ansprüche 1 bis 13, dadurch gekennzeichnet, daß der Gasstrom zu weniger als 20 Vol.% aus H2S besteht.

15. Verfahren nach einem der Ansprüche 1 bis 13, dadurch gekennzeichnet, daß der ersten Mehrwegearmatur einer oder mehrere Claus-Reaktoren und Schwefelkondensatoren vorgeschaltet sind.

16. Verfahren nach Anspruch 8, dadurch gekennzeichnet, daß die zur Kühlung des unterhalb des Schwefeltaupunktes betriebenen Katalysatorbettes vom Kesselspeisewasser aufgenommene Wärme zur Erzeugung von Hochdruckdampf für die Regenerierung eines weiteren Katalysatorbettes zur Verfügung gestellt wird.

17. Verwendung des Katalysators, der die Direktoxidation von H2S zu SO2 und/oder S ermöglicht, für das Verfahren nach einem der Ansprüche 1 bis 16.

**Claims**

1. Process for the catalytic conversion of $H_2S$ contained in a gas stream with $SO_2$ to form elemental sulphur in an apparatus comprising at least two catalyst beds, wherein at least one catalyst bed is operated for the conversion of the sulphur compounds and the adsorption of sulphur below the sulphur dew point and at least one further catalyst bed is regenerated, the vaporous sulphur which is produced is condensed out by cooling, and the gas stream which has been freed of sulphur compounds is discharged, characterised in that during the adsorption the catalyst beds are operated below the sulphur solidification point, during which the catalyst is charged with elemental sulphur in solid form, in that the catalyst beds are then regenerated by heating and in that the catalyst beds are indirectly cooled and heated from inside.

2. Process as claimed in Claim 1, characterised in that the catalytic conversion and adsorption of sulphur is carried out at temperatures between the solidification point of sulphur and the dew point of water.

3. Process as claimed in one of Claims 1 to 2, characterised in that a part of each catalyst bed is operated at temperatures above the solidification point of sulphur.

4. Process as claimed in one of Claims 1 to 3, characterised in that the catalyst beds are traversed in the same direction both during the regeneration and also during the adsorption.

5. Process as claimed in one of Claims 1 to 3, characterised in that the reactors are traversed in opposite directions during the regeneration and the adsorption.

6. Process as claimed in Claim 5 or 4, characterised in that the switch-over of the direction of flow is effected by means of at least one multi-way valve.

7. Process as claimed in one of Claims 1 to 6, characterised in that by means of a heat carrier medium the catalyst beds are internally cooled during the catalytic conversion and heated during the regeneration.

8. Process as claimed in Claim 7, characterised in that boiler feed water or steam is used as heat carrier medium.

9. Process as claimed in one of Claims 1 to 8, characterised in that the gas is heated or cooled by means of heat exchangers before it passes through adiabatic catalyst beds.

10. Process as claimed in one of claims 1 to 9, characterised in that only one multi-way valve is used to switch over the direction of flow and each catalyst bed is followed by a sulphur condenser.

11. Process as claimed in one of Claims 1 to 9, characterised in that a common sulphur condenser is used for two respective reactors.

12. Process as claimed in one of Claims 1 to 11, characterised in that a gas containing $O_2$ is added to the gas stream before it passes through the first multi-way valve.

13. Process as claimed in one of Claims 1 to 11, characterised in that gas containing $O_2$ is added prior to the sulphur condensation.

14. Process as claimed in one of Claims 1 to 13, characterised in that less than 20 vol % of the gas stream consists of $H_2S$.

15. Process as claimed in one of Claims 1 to 13, characterised in that the first multi-way valve is preceded by one or more Claus reactors and sulphur condensers.

16. Process as claimed in Claim 8, characterised in that the heat absorbed from the boiler feed water for the cooling of the catalyst bed which is operated below the sulphur dew point is made available for the production of high pressure steam for the regeneration of a further catalyst bed.

17. Use of the catalyst which facilitates the direct oxidation of $H_2S$ to $SO_2$ and/or S for the process claimed in one of Claims 1 to 16.

**Revendications**

1. Procédé pour la conversion catalytique du $H_2S$ contenu dans un courant de gaz avec du $SO_2$, en soufre élémentaire, dans une installation comportant au moins deux lits de catalyseur, où au moins un lit de catalyseur fonctionne, au-dessous du point de rosée du soufre, pour la conversion des combinaisons soufrées et pour l'adsorption du soufre, et au moins un autre lit de catalyseur est régénéré, le soufre apparaissant sous forme vapeur étant séparé par condensation par refroidissement et le courant de gaz, débarrassé des combinaisons soufrées, étant extrait, caractérisé en ce que les lits de catalyseurs fonctionnent, pendant l'adsorption, au-dessous du point de solidification du soufre, de sorte que le catalyseur se charge en soufre élémentaire sous forme solide, en ce que les lits de catalyseurs sont ensuite régénérés par chauffage, et en ce que les lits de catalyseurs sont refroidis et chauffés intérieurement par des moyens indirects.

2. Procédé selon la revendications 1, caractérisé en ce que la conversion catalytique et l'adsorption du soufre sont effectués à des températures situées entre le point de solidification du soufre et le point de rosée de l'eau.

3. Procédé selon l'une des revendications 1 ou 2, caractérisé en ce qu'une partie de chaque lit de catalyseur fonctionne à des températures supérieures au point de solidification du soufre.

4. Procédé selon l'une des revendications 1 à 3, caractérisé en ce que les lits de catalyseur sont parcourus par des courants de même direction, tant pendant la régénération qu'également pendant l'adsorption.

5. Procédé selon l'une des revendications 1 à 3, caractérisé en ce que les réacteurs sont parcourus par des courants de direction opposée, pendant la régénération et pendant l'adsorption.

6. Procédé selon la revendication 4 ou 5, caractérisé en ce que la commutation du sens d'écoulement s'effectue au moyen d'au moins une armature multivoies.

7. Procédé selon l'une des revendications 1 à 6, caractérisé en ce que les lits de catalyseur sont refroidis intérieurement, au moyen d'un milieu caloporteur, pendant la conversion catalytique, et chauffés pendant la régénération.

8. Procédé selon la revendication 7, caractérisé en ce que l'on utilise comme milieu caloporteur de l'eau d'alimentation pour chaudière, ou de la vapeur.

9. Procédé selon l'une des revendications 1 à 8, caractérisé en ce qu'avant de s'écouler dans les lits de catalyseur adiabatiques, le gaz est chauffé ou refroidi au moyen d'échangeurs de chaleur.

10. Procédé selon l'une des revendications 1 à 9, caractérisé en ce qu'une seule armature multivoies est utilisée pour effectuer la commutation du sens d'écoulement, un condenseur de soufre étant mis en circuit en aval de chaque lit de catalyseur.

11. Procédé selon l'une des revendications 1 à 9, caractérisé en ce qu'un condenseur de soufre commun est chaque fois utilisé pour deux réacteurs.

12. Procédé selon l'une des revendications 1 à 11, caractérisé en ce qu'un gaz contenant de l'oxygène est ajouté au courant de gaz, avant de passer dans la première armature multivoies.

13. Procédé selon l'une des revendications 1 à 11, caractérisé en ce qu'un gaz contenant de l'oxygène est ajouté avant la condensation du soufre.

14. Procédé selon l'une des revendications 1 à 13, caractérisé en ce que le courant de gaz se compose de moins de 20% en volume de $H_2S$.

15. Procédé selon l'une des revendications 1 à 15, caractérisé en ce qu'un ou plusieurs réacteurs de Claus et condenseurs de soufre sont mis en circuit en amont de la première armature multivoies.

16. Procédé selon la revendication 8, caractérisé en ce que la chaleur prise par l'eau d'alimentation de chaudière, pour refroidir le lit de catalyseur fonctionnant au-dessous du point de rosée du soufre, est utilisée pour la production de vapeur haute pression, pour la régénération d'un autre lit de catalyseur.

17. Utilisation du catalyseur qui permet l'oxydation directe de $H_2S$ en $SO_2$ et/ou S, pour le procédé suivant l'une des revendications 1 à 16.

# Fig.1

# Fig.2